**Europäisches Patentamt**

**European Patent Office**

**Office européen des brevets**

(19)

(11) Veröffentlichungsnummer: **0 483 504 A1**

# EUROPÄISCHE PATENTANMELDUNG

(12)

(21) Anmeldenummer: **91116183.4**

(22) Anmeldetag: **24.09.91**

(51) Int. Cl.5: **B64C 13/24**

(30) Priorität: **19.10.90 DE 4033277**

(43) Veröffentlichungstag der Anmeldung:
**06.05.92 Patentblatt 92/19**

(84) Benannte Vertragsstaaten:
**FR GB IT NL**

(71) Anmelder: **DEUTSCHE AIRBUS GMBH**
**Kreetslag**
**W-2000 Hamburg(DE)**

(72) Erfinder: **Martens, Wilhelm**
**Brinkumer Strasse 3**
**W-2870 Delmenhorst(DE)**

(54) Antriebsvorrichtung für an Flugzeugtragflügeln angeordnete Klappen.

(57) Die Erfindung bezieht sich auf eine Antriebsvorrichtung für an Flugzeugtragflügeln angeordnete Klappen (2) eines in Spannweitenrichtung in einzelne Klappensegmente unterteilten Klappensystems. Jeder Klappe sind zwei Stellvorrichtungen (3) zugeordnet, die über eine Transmissionsvorrichtung (4) untereinander und mit der anderen Flügelseite gekoppelt sind. In der Transmissionsvorrichtung (4) sind jeweils im Außenbereich ein Zentralantrieb (5) auf jeder Flügelseite angeordnet, die jeweils von separaten Signalgebern (10) mit zugeordneten Steuereinheiten (9) parallel redundant ansteuerbar sind.

FIG. 1

Die Erfindung bezieht sich auf eine Antriebsvorrichtung für an Flugzeugtragflügeln angeordnete Klappen eines in Spannweitenrichtung in einzelne Klappensegmente unterteilten Klappensystems mit jeweils von zwei separaten Signalgebern und zugeordneten Steu- ereinheiten parallel redundant ansteuerbaren Stellvorrichtungen je Klappe, die über eine Transmissionsvorrichtung untereinander und mit der anderen Flügelseite gekoppelt sind.

Bei Flugzeugen ist es üblich, zum kontrollierten Verstellen des Klappensystems Antriebsvorrichtungen zu benutzen, bei denen die in Spannweitenrichtung in einzelne Klappensegmente unterteilten Klappen antriebsmäßig über eine Transmissionsvorrichtung gekoppelt sind. So zeigt z.B. die DE 35 30 865 C2 eine Antriebsvorrichtung für die Klappen, die gemäß der dortigen Fig. 2 von zugehörigen Spindelantrieben über eine als Transmissionsvorrichtung wirkende gemeinsame Antriebswelle von einer Antriebssteuereinheit verstellbar sind. In die Antriebswelle eingeschaltete steuerbare Differentialgetriebe gestatten dabei ein unterschiedliches Ausfahren der Klappen und damit unabhängig kontrollierbare Klappenpositionen, was vorzugsweise für transsonische Tragflügel, und zwar zur Realisierung variabler Wölbung, vorteilhaft ist. Unbefriedigend ist bei diesem Antriebssystem aber, daß zur Beherrschung von Fehlern Sicherheitseinrichtungen, wie Rücklaufsperren in den Spindelantrieben oder separate Bremssysteme am Ende der Transmissionsvorrichtung erforderlich sind, die zusammen mit den dafür notwendigen Steuer- und Überwachungseinrichtungen dieses Antriebssystem unattraktiv machen.

Der Erfindung liegt daher die Aufgabe zugrunde, eine Antriebsvorrichtung für das Klappensystem von Flugzeugtragflügeln zu schaffen, bei dem der Aufbau der Transmissionsvorrichtung und die Positionierung der Antriebseinheit in der Transmissionsvorrichtung einen Verzicht von Sicherheitseinrichtungen erlauben. Diese Aufgabe ist gemäß der Erfindung dadurch gelöst, daß auf jeder Flügelseite im Außenbereich der Transmissionsvorrichtung ein Zentralantrieb vorgesehen ist.

Die erfindungsgemäße Antriebsvorrichtung kommt durch die Anordnung der Zentralantriebe jeweils im Außenbereich der Transmissionsvorrichtung ohne zusätzliche Sicherheitseinrichtungen aus, da die Zentralantriebe eigene Getriebe und eigene Bremsen besitzen und die Transmissionsvorrichtungen beider Flügelseiten miteinander gekoppelt sind. Der Aufbau dieses Antriebssystems bedeutet auch für die Steuer- und Überwachungselektronik eine wesentliche Vereinfachung, da eine spezielle Asymmetrie- bzw. Drehgeschwindigkeitsüberwachung für die Transmissionsvorrichtung nicht erforderlich ist.

Weiterbildungen und vorteilhafte Ausgestaltungen der Erfindung sind den Ansprüchen 2 bis 6 zu entnehmen.

Die Erfindung wird anhand der beiliegenden Zeichnung näher erläutert. Es zeigen:

Fig. 1     eine Prinzipdarstellung einer Antriebsvorrichtung für das Klappensystem von Flugzeugtragflügeln und

Fig. 2     einen Zentralantrieb für die Antriebsvorrichtung nach Fig. 1.

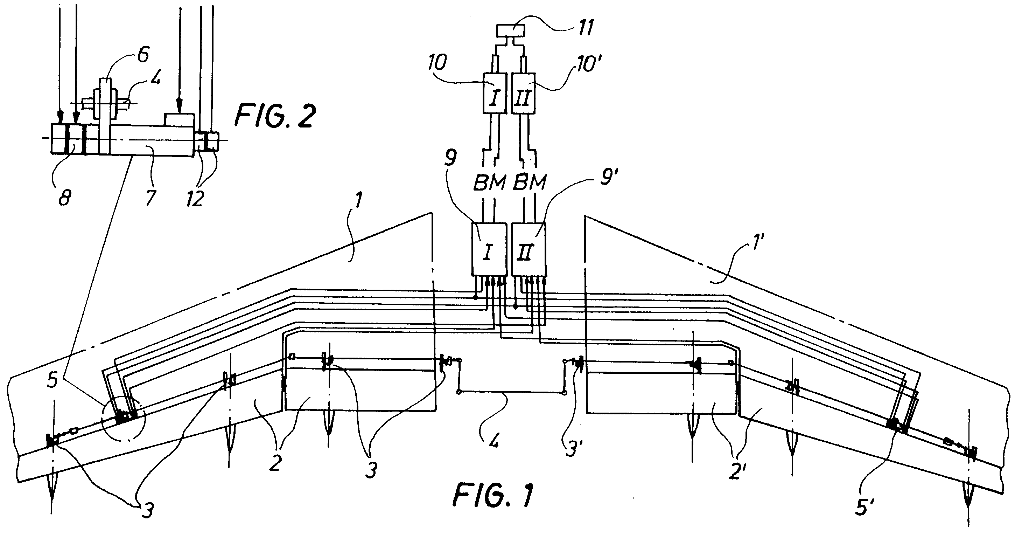

Wie die Darstellung nach. Fig 1 zeigt, sind die beiden Flügel 1,1' in bekannter Weise mit Hinterkantenklappen 2,2' versehen, welche je Klappe 2 über zwei Stellvorrichtungen 3 verfügen. Die Stellvorrichtungen 3 sind an eine Transmissionsvorrichtung 4 gekoppelt, die jeweils zwischen den Stellvorrichtungen 3 der äußersten Klappe einen in Fig. 2 näher dargestellten Zentralantrieb 5 einschließen. Die Transmissionsvorrichtungen 4 in den Flügeln 1,1' sind über den Rumpf miteinander verbunden und die Zentralantriebe 5 werden von den Steuereinheiten 9,9' redundant angesteuert, bzw. dazu positionsrückgemeldet. Die Steuereinheiten 9,9' werden von je einem Signalgeber 10,10' angesteuert, die wiederum von einem gemeinsamen Bedienhebel 11 synchron einstellbar sind. Steuersignale werden somit redundant von den Signalgebern 10 zu den Zentralantrieben 5 übertragen, so daß ein Fehler in einem Signalgeber 10 oder in einer Steuereinheit 9 ohne Auswirkung auf die Steuerbarkeit des Antriebssystems bleibt.

Wie Fig. 2 zeigt, besteht ein Zentralantrieb 5 aus einem hydraulischen oder elektrischen Motor 7 mit angeflanschtem Getriebe 6 und einer Bremse 8. Die Transmissionsvorrichtung 4 ist dabei direkt mit dem Getriebe 6 gekoppelt. Am Motor ist darüber hinaus noch ein Positionsgeber 12 zur Positionsrückmeldung für die Steuereinheiten 9 vorgesehen. Die Zentralantriebe 5 können somit vom Cockpit eines Flugzeuges mit dem Bedienhebel 11 angesteuert werden, wobei jede der von den Signalgebern 10 angesteuerten Steuereinheiten 9 zunächst je ein Positionssignal und ein Bremslössignal den Zentralantrieben 5 zuleitet. Die Steuereinheiten 9,9' halten die Bremsen 8 der Zentralantriebe 5 solange gelöst, bis die vorgegebene Position erreicht und rückgemeldet ist. Beide Zentralantriebe arbeiten dabei parallel und synchron. Sollte aber ein Signalübertragungsweg ausfallen, dann treibt nur ein Zentralantrieb 5 alle Klappen, und zwar über die gekoppelte Transmissionsvorrichtung 4 an. Die Bremse 8 vom Motor 7 der fehlerhaften Antriebsseite bleibt dabei gelöst. Die Positionsgeber 12 an den Zentralantrieben 5 dienen zur Kontrolle der vorgegebenen Klappenpositionen bzw. zur Überwachung nicht synchron laufender Klappenverstellungen. Bei einem Ausfall, z.B. Überschreitung der signalisierten Position einzelner oder aller Klappen blockieren die Bremsen 8 beider Zentralantriebe 5 die gesamte Antriebsvorrichtung.

In der Darstellung nach Fig. 1 sind die Zentralantriebe 5 zwischen den beiden Stellantrieben 3 der äußersten Klappe 2 der Tragflügel 1 angeordnet, aber es ist auch möglich, die Zentralantriebe jeweils jenseits der äußersten Stellantriebe, d.h. als Abschluß der Transmissionsvorrichtung mit gleich guter Wirkung anzuordnen. Die erfindungsgemäße Antriebsvorrichtung kann sowohl zum Antrieb von Hinterkantenklappen als auch zum Antrieb von Vorderkantenklappen für Flugzeugtragflügel benutzt werden.

Die erfindungsgemäße Antriebsvorrichtung ist auch für Klappensysteme mit einem Stellantrieb je Klappe verwendbar unter der Voraussetzung spezieller Führungen für die Klappen.

Bezugszahlen:

| | |
|---|---|
| 1 | Flugzeugtragflügel |
| 2 | Klappe |
| 3 | Stellvorrichtung |
| 4 | Transmissionsvorrichtung |
| 5 | Zentralantrieb |
| 6 | Getriebe |
| 7 | Motor |
| 8 | Bremse |
| 9 | Steuereinheit |
| 10 | Signalgeber |
| 11 | Bedienhebel |
| 12 | Positionsgeber |

**Patentansprüche**

1. Antriebsvorrichtung für an Flugzeugtragflügeln angeordnete Klappen eines in Spannweitenrichtung in einzelne Klappensegmente unterteilten Klappensystems, mit jeweils zwei von separaten Signalgebern und zugeordneten Steuereinheiten parallel redundant ansteuerbaren Stellvorrichtungen je Klappe, die über eine Transmissionsvorrichtung untereinander und mit der anderen Flügelseite gekoppelt sind, dadurch gekennzeichnet, daß auf jeder Flügelseite im Außenbereich der Transmissionsvorrichtung (4) ein Zentralantrieb (5) vorgesehen sind.

2. Antriebsvorrichtung nach Anspruch 1, dadurch gekennzeichnet, daß die Zentralantriebe (5) zwischen den Stellvorrichtungen (3) der jeweils äußersten Klappe des Klappensystems in der Transmissionsvorrichtung (4) angeordnet ist.

3. Antriebsvorrichtung nach Anspruch 1, dadurch gekennzeichnet, daß die Zentralantriebe (5) jeweils jenseits der äußersten Stellvorrichtung (3) der Klappen (2) angeordnet sind und den Abschluß der Transmissionsvorrichtung (4) bilden.

4. Antriebsvorrichtung nach einem der Ansprüche 1 bis 3, dadurch gekennzeichnet, daß die Zentralantriebe (5) aus einem Motor (7) mit angeflanschtem Getriebe (6) und einer Bremse (8) bestehen, und daß die Bremsen (8) beider Zentralantriebe (5) über die Steuereinheiten (9) beider Signalgeber (10) parallel redundant ansteuerbar sind.

5. Antriebsvorrichtung nach einem der Ansprüche 1 bis 4, dadurch gekennzeichnet, daß die Zentralantriebe (5) mit Positionsgebern (12) ihre jeweilige Position den Steuereinheiten (9) rückmelden, die beim Überschreiten der signalisierten Position aller oder einzelner Klappen (2) die Bremsen (8) beider Zentralantriebe (5) zum Blockieren der Antriebsvorrichtung ansteuern.

6. Antriebsvorrichtung nach einem der vorhergehenden Ansprüche, dadurch gekennzeichnet, daß die Antriebsvorrichtung zum Verstellen von Hinterkantenklappen und/oder Vorderkantenklappen an Tragflügeln von Flugzeugen einsetzbar ist.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-4 441 675 (BOEHRINGER) <br> * Spalte 1, Zeile 6 - Spalte 1, Zeile 10 * <br> * Spalte 2, Zeile 25 - Spalte 2, Zeile 62 * <br> * Spalte 3, Zeile 22 - Spalte 3, Zeile 59 * <br> * Spalte 5, Zeile 14 - Spalte 6, Zeile 26 * <br> * Spalte 6, Zeile 38 - Spalte 7, Zeile 7; <br> Abbildungen 1-5 * <br> --- | 1,3-6 | B64C13/24 |
| X | US-A-4 779 822 (BURANDT) <br> * Spalte 3, Zeile 34 - Spalte 4, Zeile 23 * <br> * Spalte 6, Zeile 38 - Spalte 6, Zeile 66; <br> Abbildung 1 * <br> --- | 1,5,6 | |
| A | FR-A-2 603 866 (MESSERSCHMITT-BÖLKOW-BLOHM GMBH) <br> * Seite 1, Zeile 8 - Seite 1, Zeile 19 * <br> * Seite 2, Zeile 22 - Seite 3, Zeile 1 * <br> * Seite 5, Zeile 15 - Seite 6, Zeile 14; <br> Abbildung 1 * <br> ----- | 1 | |

**RECHERCHIERTE SACHGEBIETE (Int. Cl.5 )**

B64C

Der vorliegende Recherchenbericht wurde für alle Patentansprüche erstellt

| Recherchenort | Abschlußdatum der Recherche | Prüfer |
|---|---|---|
| DEN HAAG | 17 JANUAR 1992 | ZERI A. |

EPO FORM 1503 03.82 (P0403)